# EUROPEAN PATENT SPECIFICATION

(11) **EP 2 830 359 B1**
(45) Date of publication and mention of the grant of the patent: **21.09.2016**
(21) Application number: 13178143.7
(22) Date of filing: 26.07.2013
(51) Int. Cl.: H04W 36/22, H04W 36/04

(54) **Method for offloading, by at least one home base station, a base station of a wireless cellular telecommunication network**
Verfahren zum Entladen durch mindestens einer Heimbasisstation einer Basisstation eines drahtlosen zellulären Telekommunikationsnetzwerks
Procédé pour le déchargement, par au moins une station de base domestique, d'une station de base d'un réseau de télécommunication cellulaire sans fil

(43) Date of publication of application: 28.01.2015
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Khanfouci, Mourad, 35708 Rennes Cedex 7 (FR); Brunel, Loïc, 35708 Rennes Cedex 7 (FR)
(74) Representative: Le Guen-Maillet

(56) References cited:
- WO-A1-96/06512
- US-A1- 2009 163 223
- US-A1- 2012 115 541

## Description

The present invention relates generally to a method and a system for offloading, by at least one home base station, a base station of a wireless cellular telecommunication network.

Wireless cellular telecommunication networks are largely used today. The requirements in terms of throughput and the available number of service for the users of such networks grows more and more and may cause overload of some base stations.

Today some base stations provide an access to such networks in small coverage areas. These base stations, named hereinafter home base stations, may offload classical base stations named also macro base stations of wireless cellular telecommunication networks. These home base stations may also be called pico base stations or femto base stations.

The offloading of the macro network by the home base stations may be defined as the means for provisioning resources for the mobile terminals by procedures that are done by the home base stations or done jointly between the home base stations and the macro base stations or done between the macro base station, the home base stations and a coordinator or a central node.

The patent application US 2012/115541 discloses a method of distributing load and base stations.

The patent application US 2009/163223 discloses a method of load balancing. The patent application WO 96/06512 discloses criteria for deciding handover is a wireless telecommunication system.

For example, a combination of handover and load balancing or selective handover are viewed as simple ways to provide such resource provisioning. In this case, the high traffic demand by the mobile terminals may be handed over to the nearest home base station that has enough resources to handle them.

To that end, the present invention concerns a method for offloading, by at least one home base station, a base station of a wireless cellular telecommunication network, the base station serving mobile terminals, characterized in that the method comprising the steps of:
- obtaining, by the base station and/or the home base stations, signal to interference plus noise ratio on signals received by the mobile terminals served by the base station from the at least one home base station,
- determining, by the base station and/or the home base stations, mobile terminals which are located in the neighborhood of the home base stations,
- determining, by the base station and/or the home base stations, metrics at least from the obtained signal to interference plus noise ratio,
- determining, by a server of the wireless cellular telecommunication network, clusters of mobile terminals from the metrics, each cluster comprising information identifying mobile terminals which are neighbours of the same number of home base stations,
- prioritizing, by the server, mobile terminals which are identified in the cluster comprising information identifying mobile terminals which are neighbours of the lowest number of home base stations and performing handover of the prioritized mobile terminals to at least one home base station.

The present invention also concerns a system for offloading, by at least one home base station, a base station of a wireless cellular telecommunication network, the base station serving mobile terminals, characterized in that the system comprises:
- means for obtaining, by the base station and/or the home base stations, signal to interference plus noise ratio on signals received by the mobile terminals served by the base station from the at least one home base station,
- means for determining, by the base station and/or the home base stations, mobile terminals which are located in the neighborhood of the home base stations,
- means for determining, by the base station and/or the home base stations, metrics at least from the obtained signal to interference plus noise ratio,
- means for determining, by a server of the wireless cellular telecommunication network, clusters of mobile terminals from the metrics, each cluster comprising information identifying mobile terminals which are neighbours of the same number of home base stations,
- means for prioritizing, by the server, mobile terminals which are identified in the cluster comprising information identifying mobile terminals which are neighbours of the lowest number of home base stations and performing handover of the prioritized mobile terminals to at least one home base station.

Thus, congestion is reduced at the base station since enough resources are provisioned for the mobile terminals by the present invention. The quality of service given to the mobile terminals served by the base station and/or the home base stations is not reduced with the increased number of mobile terminals accessing to the network.

According to a particular feature, the method is executed iteratively.

Thus, at least one mobile terminal may be re- attached to the home base station, so the method takes into account the mobility of the mobile terminals and/or radio condition changes.

According to a particular feature, the method is executed as far as the variation of the sum of the metrics determined by the base station and home base stations is below a threshold over one or several iteration.

Thus, the method is stopped when a predefined level of offloading of the base station is achieved.

According to a particular feature, the metrics are the maximum offered throughput improvement obtained by maximizing the sum over mobile terminals of the throughput improvement offered to each mobile terminal MT by handing it over to one home base station compared to current offered throughput by the base station.

Thus, the complexity in the implementation of the present invention is reduced in comparison with a maximization of the metric done individually for each mobile terminal.

According to a particular feature, the metrics are the number of free resources remaining after deciding to serve a given mobile terminal by one home base station.

Thus, handover of mobile terminals maximizes the number of available resources for serving at least one mobile terminal by the base station.

According to a particular feature, the metrics are determined for each neighbouring mobile terminal only using available resources corresponding to total amount of resources minus the number of resources needed to be freed by the base station.

Thus, the throughput is maximized for each mobile terminal at the base station.

According to a particular feature, the metrics are the number of free resources after the handover of at least one mobile terminal when keeping the same throughput for mobile terminal in the home base station to which the mobile terminal may be handed over.

Thus, throughput degradation is minimized for at least one mobile terminal when it is served by at least one home base station and the resources at the base station are maximized.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :
Fig. 1 represents a system composed of plural base stations and/or home base station of a wireless cellular telecommunication network in which the present invention is implemented;
Fig. 2 is a diagram representing the architecture of a base station in which the present invention is implemented;
Fig. 3 is a diagram representing the architecture of a home base station in which the present invention is implemented;
Fig. 4 is a diagram representing the architecture of a server in which the present invention is implemented;
Fig. 5 discloses a first example of an algorithm executed by a base station and/or each home base station according to the present invention;
Fig. 6 discloses an example of an algorithm executed by a server according to the present invention;
Fig. 7 discloses a second example of an algorithm executed by a base station and/or each home base station according to the present invention;
Fig. 8 discloses an example of a determination of a metric executed by each home base station and/or the base station according to the second example of realization;
Fig. 9 discloses a third example of an algorithm executed by a base station and/or each home base station according to the present invention;

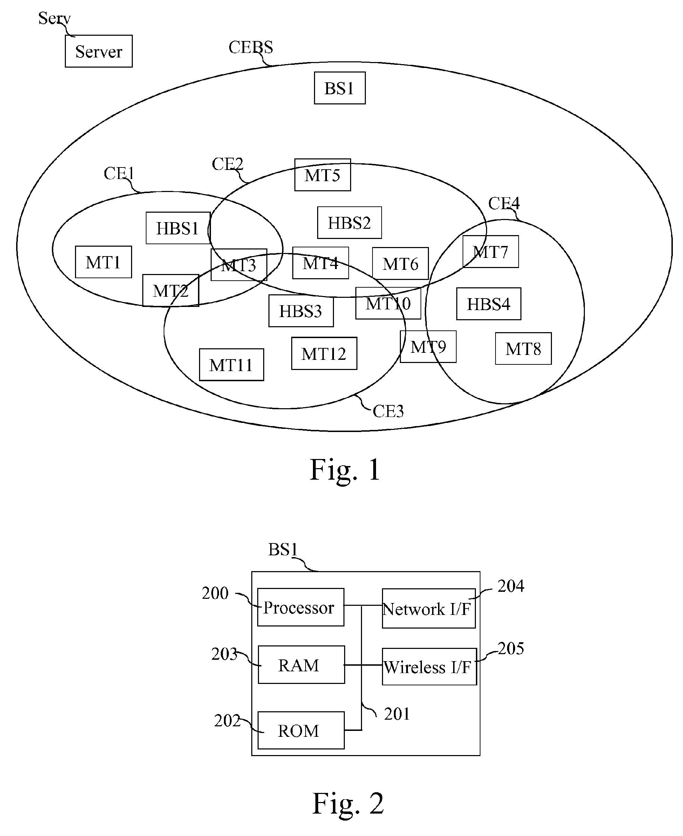

**Fig. 1** represents a system composed of plural base stations and/or home base station of a wireless cellular telecommunication network in which the present invention is implemented.

The wireless cellular telecommunication network comprises plural base stations, only one base station BS1 is shown for the sake of clarity.

The base station BS1 radiates signals in a cell CEBS that can be received and processed by mobile terminals located in the area of the cell CEBS. The base station BS1 receives and is able to process signals transferred by mobile terminals MT located in the cell CEBS.

The mobile terminals MT1 to MT12 are located in the cell CEBS.

Plural home base stations HBS1 to HBS4 are located in the cell CEBS of the base station BS1. Each home base station HBS1 to HBS4 radiates signals in a respective cell CE1 to CE4. The home base stations HBS1 to HBS4 may be pico or femto base stations or relay nodes.

The mobile terminals MT1, MT2 and MT3 are located in the cell CE1 of the home base station HBS 1.

The mobile terminals MT2, MT3 MT4 MT6 and MT10 are located in the cell CE2 of the home base station HBS2.

The mobile terminals MT2, MT3, MT4, MT6 and MT10 are located in the cell CE2 of the home base station HBS2.

The mobile terminals MT2, MT3, MT4, MT6, MT9, MT10, MT11 and MT12 are located in the cell CE3 of the home base station HBS3.

The mobile terminals MT7, MT8 and MT9 are located in the cell CE4 of the home base station HBS4.

The wireless cellular telecommunication network comprises a server Serv. The server Serv may be a dedicated device or may be comprised in a base station of the wireless cellular telecommunication network.

According to the invention:
- the base station and/or the home base stations obtain, signal to interference plus noise ratio on signals received by the mobile terminals served by the base station from the at least one home base station,
- the base station and/or the home base stations determine mobile terminals which are located in the neighborhood of the home base stations,
- the base station and/or the home base stations determine metrics at least from the obtained signal to interference plus noise ratio,
- the server determines clusters of mobile terminals from the metrics, each cluster comprising information identifying mobile terminals which are neighbours of the same number of home base stations,
- the server prioritizes mobile terminals which are identified in the cluster comprising information identifying mobile terminals which are neighbours of the lowest number of home base stations and performing handover of the prioritized mobile terminals to at least one home base station.

**Fig. 2** is a diagram representing the architecture of a base station in which the present invention is implemented.

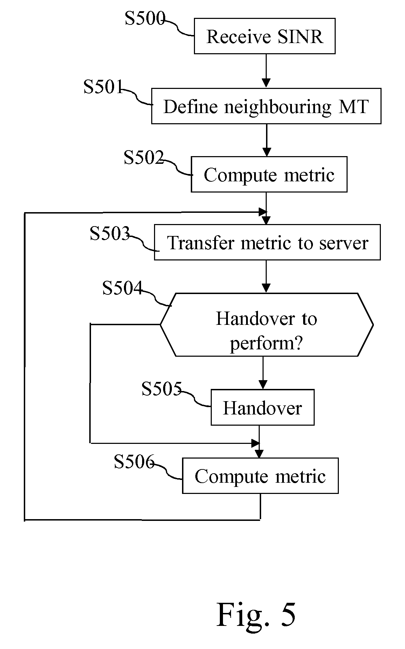

The base station BS1 has, for example, an architecture based on components connected together by a bus 201 and a processor 200 controlled by the programs as disclosed in Figs. 5 or 7 and 8 or 9.

It has to be noted here that the base station BS1 may have an architecture based on dedicated integrated circuits.

The bus 201 links the processor 200 to a read only memory ROM 202, a random access memory RAM 203, a network interface 204 and a wireless interface 205.

The memory 203 contains registers intended to receive variables and the instructions of the programs related to the algorithms as disclosed in Figs. 5 or 7 and 8 or 9.

The processor 200 controls the operation of the wireless interface 205.

The read only memory 202 contains instructions of the programs related to the algorithms as disclosed in Figs. 5 or 7 and 8 or 9, which are transferred, when the base station BS1 is powered on, to the random access memory 203.

Any and all steps of the algorithms described hereafter with regard to Figs. 5 or 7 and 8 or 9 may be implemented in software by execution of a set of instructions or program by a programmable computing machine, such as a PC (*personal Computer*)*,* a DSP (*Digital Signal Processor*) or a microcontroller; or else implemented in hardware by a machine or a dedicated component, such as an FPGA *(Field-Programmable Gate Array*) or an ASIC (*Application-Specific Integrated Circuit).*

In other words, the base station BS1 includes circuitry, or a device including circuitry, causing the base station BS1 to perform the steps of the algorithms described hereafter with regard to Figs. 5 or 7 and 8 or 9.

Such a device including circuitry causing the base station BS1 to perform the steps of the algorithms described hereafter with regard to Fig. 5 or 7 and 8 or 9 may be an external device connectable to the base station BS1.

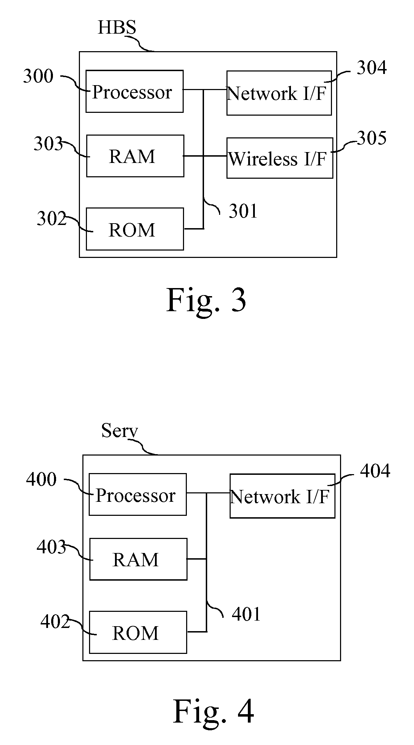

**Fig. 3** is a diagram representing the architecture of a home base station in which the present invention is implemented.

The home base station HBS has, for example, an architecture based on components connected together by a bus 301 and a processor 300 controlled by the programs as disclosed in Figs. 5 or 7 and 8 or 9.

It has to be noted here that the home base station HBS may have an architecture based on dedicated integrated circuits.

The bus 301 links the processor 300 to a read only memory ROM 302, a random access memory RAM 203, a network interface 304 and a wireless interface 305.

The memory 303 contains registers intended to receive variables and the instructions of the programs related to the algorithms as disclosed in Figs. 5 or 7 and 8 or 9.

The processor 300 controls the operation of the wireless interface 305.

The read only memory 302 contains instructions of the programs related to the algorithms as disclosed in Figs. 5 or 7 and 8 or 9, which are transferred, when the home base station HBS is powered on, to the random access memory 303.

Any and all steps of the algorithms described hereafter with regard to Figs. 5 or 7 and 8 or 9 may be implemented in software by execution of a set of instructions or program by a programmable computing machine, such as a PC (*personal Computer*)*,* a DSP (*Digital Signal Professor*) or a microcontroller; or else implemented in hardware by a machine or a dedicated component, such as an FPGA *(Field-Programmable Gate Array*) or an ASIC (*Application-Specific Integrated Circuit).*

In other words, the home base station HBS includes circuitry, or a device including circuitry, causing the home base station HBS to perform the steps of the algorithms described hereafter with regard to Figs. 5 or 7 and 8 or 9.

Such a device including circuitry causing the home base station HBS to perform the steps of the algorithms described hereafter with regard to Fig. 5 or 7 and 8 or 9 may be an external device connectable to the home base station HBS.

**Fig. 4** is a diagram representing the architecture of a server in which the present invention is implemented.

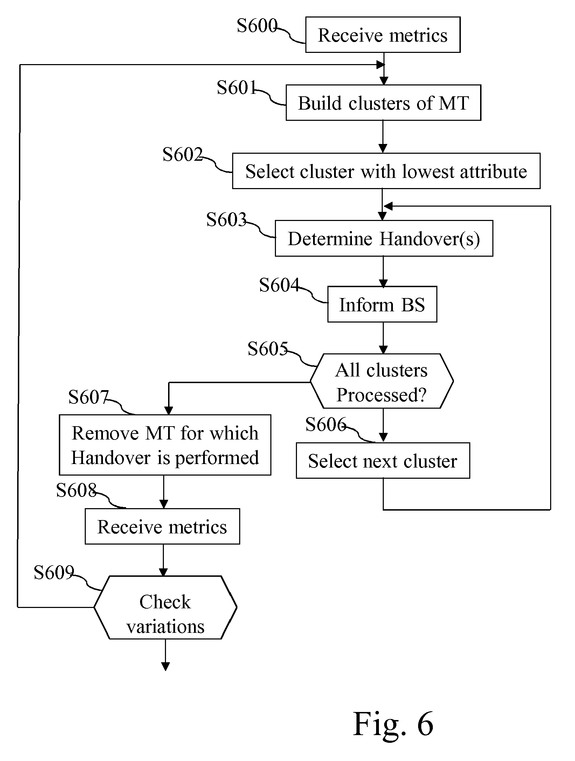

The server Serv has, for example, an architecture based on components connected together by a bus 401 and a processor 400 controlled by the programs as disclosed in Fig. 6.

It has to be noted here that the server Serv may have an architecture based on dedicated integrated circuits.

The bus 401 links the processor 400 to a read only memory ROM 402, a random access memory RAM 403 and a network interface 404.

The memory 403 contains registers intended to receive variables and the instructions of the programs related to the algorithms as disclosed in Fig. 6.

The processor 400 controls the operation of the wireless interface 405.

The read only memory 402 contains instructions of the programs related to the algorithms as disclosed in Fig. 6, which are transferred, when the server Serv is powered on, to the random access memory 403.

Any and all steps of the algorithms described hereafter with regard to Fig. 6 may be implemented in software by execution of a set of instructions or program by a programmable computing machine, such as a PC (*personal Computer*)*,* a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit).*

In other words, the server Serv includes circuitry, or a device including circuitry, causing the server Serv to perform the steps of the algorithms described hereafter with regard to Fig. 6.

Such a device including circuitry causing the server Serv to perform the steps of the algorithms described hereafter with regard to Fig. 6 may be an external device connectable to the server Serv.

**Fig. 5** discloses a first example of an algorithm executed by the base station and/or each home base station according to the present invention.

The present algorithm will be disclosed in an example where it is executed by the processor 200.

At step S500, the processor 200 receives, from mobile terminals MT located in the cell CEBS measurement of the SINR (Signal to Interference plus Noise Ratio) on signals received from home base stations HBS. At least one mobile terminal MT is served by a home base station or each mobile terminal MT is served by the base station BS1.

A mobile terminal MT is served by a base station BS1 or a home base station HBS1 when it can establish or receive a communication with a remote communication device through the home base station BS1 or the home base station HBS.

The measurements may be received through the wireless interface 205 or through the network interface 204.

At next step S501, the processor 200 defines; from the received measurements of SINR, neighbouring mobile terminal MT for each home base station HBS. A neighbouring mobile terminal MT of a home base station HBS is a mobile terminal MT which receives signals radiated by the home base station HBS at a SINR which is upper than a predetermined threshold.

At next step S502, the processor 200 computes one metric or several metrics associated to the received SINR.

The metric M*ᵢ* may be the maximum offered throughput improvement, obtained by maximizing the sum over all served mobile terminals MT of the throughput improvement offered to each mobile terminal MT by handing it over to the home base station HBS*i* or the base station BSi compared to current offered throughput at base station i. According to the example of Fig. 1, *i*=1 for the base station BS1 and *i*=1 to 4 for the home base stations HBS1 to HBS4.

The metrics M*ᵢⱼ* may be the throughput improvement of the served mobile terminal MT*j* by the base station BS*i*, the served mobile terminals MT by the base station BS*i* being determined by maximizing the maximum offered throughput.

The metric M*ᵢ* may be the maximum offered throughput, obtained by maximizing the sum over all served mobile terminals MT of the throughput offered to each mobile terminal MT by the home base station HBS*i*.

The metrics M*ᵢⱼ* may be the throughput of each served mobile terminal MT*j* by the home base station HBS*i*, the served mobile terminal MT*j* being determined by maximizing the maximum offered throughput.

The metrics M*ᵢⱼ* may be the number of free resources remaining after deciding to serve a given mobile terminal MT*j* by the home base station HBS*i*.

At next step S503, the processor 200 commands the transfer through the network interface 204 of the determined metric or metrics to the server Serv together with information identifying each mobile terminal MT served by the base station BS1.

At next step S504, the processor 200 receives a message through the network interface 204 indicating if a handover has to be performed or not for each mobile terminal MT served by the base station BS1.

If at least one handover has to be performed, the processor 200 moves to step S505 and performs a handover for each mobile terminal MT for which a handover has to be performed. After that, the processor 200 moves to step S506.

If no handover has to be performed, the processor 200 moves from step S504 to step S506.

At step S506, the processor 200 computes one metric or several metrics associated to the received SINR for only the mobile terminals for which no handover is performed at step S505. The metric or the metrics are determined as disclosed at step S502.

After that, the processor 200 returns to step S503.

**Fig. 6** discloses an example of an algorithm executed by a server according to the present invention.

More precisely, the present algorithm is executed by the processor 400 of the server Serv.

The present algorithm is executed periodically. For example, the periodicity may depend on the velocity of the mobile terminal MT. If the mobile terminals MT have a zero or low velocity, the present algorithm is run periodically in order to take into account new positions of mobile terminals MT. If the mobile terminals MT have medium/high velocity, their position may change from one iteration to the other. Thus, the network configuration may change within one or several iterations. In this case, the steps S600 to S605 may be executed only one time.

It has to be noted here that only the mobile terminals MT having a low velocity may be involved in the present algorithm.

At step S600, the processor 400 receives the metrics transferred by at least one home base station HBS and the base station BS1 together with information identifying each mobile terminal MT served by the base station BS1 and the home base stations HBS through the network interface 404.

At next step S601, the processor 400 builds clusters of mobile terminals MT. Each cluster corresponding to an attribute, which is, for example, the number of home base stations HBS1 which transferred information identifying the mobile terminal MT together with the metrics received at step S600.

For example, a mobile terminal MT*j* belongs to *cluster k* if it is identified by *k* home base stations HBS1. It has to be noted here that, the higher the attribute of the cluster which the mobile terminal MT*j* belongs to is, the higher the flexibility to handover the mobile terminal MT*j* to a home base station HBS is.

A next step S602, the processor 400 selects the cluster which has the lowest attributes, i.e. which comprises the mobile terminals MT for which the number of home base stations HBS which transferred information identifying the mobile terminal MT is the lowest.

At next step S603, the processor 400 builds at least one pair of one mobile terminal MT and one home base station HBS which transferred information identifying the mobile terminal MT or builds for each mobile terminal MT in the cluster, one pair of one mobile terminal MT and one home base station HBS which transferred information identifying the mobile terminal MT. The pair identifies the mobile terminal MT of the pair for which a handover has to be performed to the home base station HBS of the pair.

At next step S604, the processor 400 transfers a message to each home base station HBS and/or the base station BS1 through the network interface 404 indicating if a handover has to be performed or not for each identified mobile terminal MT.

At next step S605, the processor 400 checks if all clusters have been processed. If all clusters have been processed, the processor 400 moves to step S607. Otherwise, the processor 400 moves to step S606.

At step S606, the processor 400 selects the following cluster which has an attribute upper than the previously selected cluster and returns to step S603.

At step S607, the processor 400 removes, from the cluster, the mobile terminal MT or mobile terminals MT for which a handover is requested to be performed.

At next step S608, the processor 400 detects the reception, through the network interface 404 of metrics from home base stations HBS or the base station BS1 as disclosed at step S600.

At next step S609, the processor 400 checks if the variation of the sum of base station BS1 and home base stations HBS metrics is below a given threshold over one or several iterations.

The sum of throughputs offered by the base station BS1 or home base stations HBS may be used in a variant.

If the variation of the sum of base station BS1 and home base stations HBS metrics is below the given threshold, the present algorithm is stopped. Otherwise, the processor 400 returns to step S601.

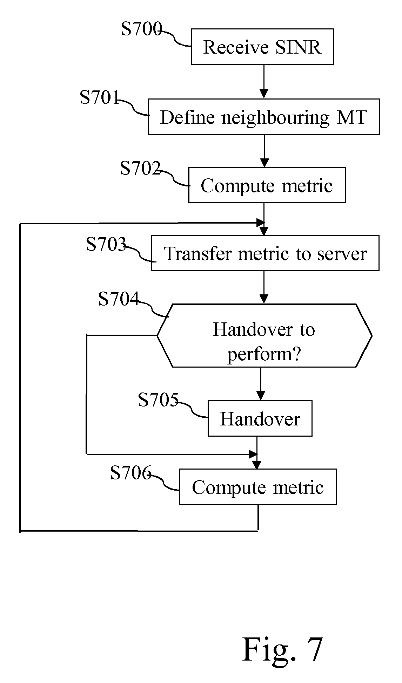

**Fig. 7** discloses a second example of an algorithm executed by a base station and/or each home base station according to the present invention.

The present algorithm will be disclosed in an example where it is executed by the processor 200.

At step S700, the processor 200 receives, from mobile terminals MT located in the cell CEBS measurement of the SINR (Signal to Interference plus Noise Ratio) on signals received from home base stations HBS.

The measurements may be received through the wireless interface 205 or through the network interface 204.

At next step S701, the processor 200 defines; from the received measurements of SINR, neighbouring mobile terminal MT for each home base station HBS.

At next step S702, the processor 200 computes one metric or several metrics associated to the received SINR.

For example, the metric M*ᵢ* is the maximum offered throughput improvement for base station BSi or home base station HBS*i*. The metric M*ᵢ* is obtained by maximizing the sum over all served mobile terminals MT*j* of the throughput improvement M*_{i,j}* offered to each mobile terminal MT*j* by handing it over to the home base station HBS*i* compared to current throughput M*ᵢ = M_{i,j}* where M*_{i,j}* is the difference between the throughput offered to mobile terminal MT*j* by the home base station HBS*i* and the throughput currently offered by its serving base station BS1.

Each computed M*ᵢ* metric corresponds to an associated list of mobile terminals MT served by the home base station HBS*i* or which are the neighboring mobile terminals MT that may be served by the home base station HBSi. The associated list of served mobile terminals MT may not contain all neighboring mobile terminals MT that may be served by the home base station HBSi. The metrics M*ᵢⱼ* may be stored for each mobile terminal MT of the associated list. It has to be noted here that the throughput improvement metric requires that the serving base station BS1 of a neighboring mobile terminal MT*j* also informs the home base station HBS*i* of the throughput currently provided to neighboring mobile terminal MT*j*.

At next step S703, the processor 200 commands the transfer of the determined metric or metrics to the server Serv together with information identifying each mobile terminal MT served by the base station BS1 through the network interface 204. The metric M*ᵢ* and the associated list of served mobile terminals MT or neighboring mobile terminals are also transferred.

In a variant, pairs of the metrics M*ᵢⱼ* are transferred.

At next step S704, the processor 200 receives a message through the network interface 204 indicating if a handover has to be performed or not for each mobile terminal MT served by the base station BS1.

If at least one handover has to be performed, the processor 200 moves to step S705 and performs a handover for each mobile terminal MT for which a handover has to be performed. After that, the processor 200 moves to step S706.

If no handover has to be performed, the processor moves from step S704 to step S706.

At step S706, the processor 200 computes one metric or several metrics associated to the received SINR for only the mobile terminals MT for which no handover is performed at step S705. The metric or the metrics are determined as disclosed at step S702.

After that, the processor 200 returns to step S703.

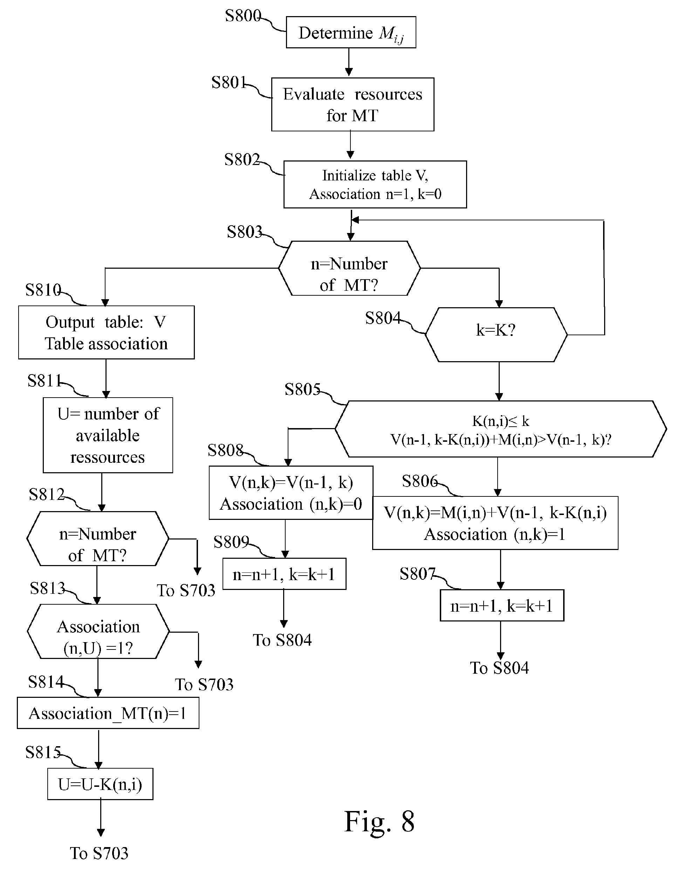

**Fig. 8** discloses an example of a determination of a metric executed by each home base station and/or the base station according to the second example of realization of the present invention.

In the example of Fig. 8, the variable n corresponds to the index associated to the mobile terminals MT and the variable k corresponds to the index associated with the available resources at the base station BSi or the home base station HBSi. The variable Number of MT represents the total number of mobile terminals MT served or in the neighboring of the home base station HBSi.

At step S800, the processor 200 determines the metrics M(i,n) for the mobile terminals n that may be associated to the home base station HBS*i* or to the base station BSi.

At next step S801, the processor 200 evaluates the resources given as K(n,i) needed for each mobile terminal MTn, served by the home base station HBS*i* or by the base station BSi.

At next step S802, the processor 200 initializes tables noted V and a table denoted Association to null value, variable n to the value 1 and variable k to the null value.

At next step S803, the processor 200 checks if the variable n is equal to the Number of MT.

If the variable n is equal to the Number of MT, the processor 200 moves to step S810. Otherwise, the processor 200 moves to step S804.

At step S804, the processor 200 checks if the variable k is equal to K, the maximum number of available resources at the home base station HBS1. If k is not equal to K, the processor 200 moves to S805. Otherwise, the processor 200 moves to step S803 and increments the variable n.

At step S805, the processor 200 check if K(n,i) is lower than or equal to k and if V(n-1, k-K(n,i))+M(i,n)>V(n-1, k).

K(n,i) is the number of resources that can be allocated to the mobile terminal MTn by the home base station HBSi.

If K(n,i) is lower than or equal to k and if V(i-1, k-K(n,i))+M(n,i)>V(i-1, k), the processor 200 moves to step S806. Otherwise, the processor 200 returns to step S808.

At step S806, the processor 200 updates the entry V(n,k) of the table V with the value V(n,k)=M(n,i)+V(n-1, k-K(n,i) and sets the corresponding entry to the binary association table Association(n,k)=1.

The entry of the table Association (n,k) represents the handover decision of the mobile terminal MTn to the base station HBS*i* that maximizes the metric and such that the free resources at the home base station HBS*i* are below the maximum resources K. If Association (n,k) = 1, the handover is allowed, otherwise if Association (n,k) = 0, the handover is not allowed.

At next step S807, the processor 200 increments the variable i by one and the variable k by one.

After that, the processor 200 returns to step S804.

At step S808, the processor 200 calculates V(n,k)=V(n-1, k) and sets the entry of the binary association table Association(n,k)=0.

At next step S809, the processor 200 increments the variable i by one and the variable k by one.

After that, the processor 200 returns to step S804.

At step S810, the processor 200 outputs the metric value V(Number of MT,K) and the binary association table Association as an entry for the calculation of the association vector Association_MT. The association vector entry Association MT(n)=1 if the handover of mobile terminal MTn maximizes the sum metric and the resources needed for the mobile terminal MTn, K(n,i) can be handled by the home base station HBSi.

At next step S811, the processor 200 sets the variable U to the number of available resources at the home base station HBS.

At next step S812, the processor 200 checks if the variable n is equal to Number of MT. If the variable n is equal Number of MT, the processor 200 moves to step S813.

Otherwise, the processor 200 moves to step S703 of Fig. 7 and transfers the association vector Association_MT for the neighboring mobile terminals MT of the home base station HBS*i* with the metric value V(Number of MT,K) to the server Serv.

At step S813, the processor 200 checks if the entry of the binary association table Association(n,U) is equal to one. If the entry of the binary association table Association(i,U) is equal to one, the processor 200 moves to step S814. Otherwise, the processor 200 moves to step S703 of Fig. 7.

At next step S814, the processor 200 sets the association vector Association_MT(n) to 1. This means that the handover of the mobile terminal MTn is allowed and this handover maximizes the cumulative metric.

At next step S815, the processor 200 steps the variable U to U minus K(n,i).

At next step S816, the processor 200 moves to step S703 of Fig. 7.

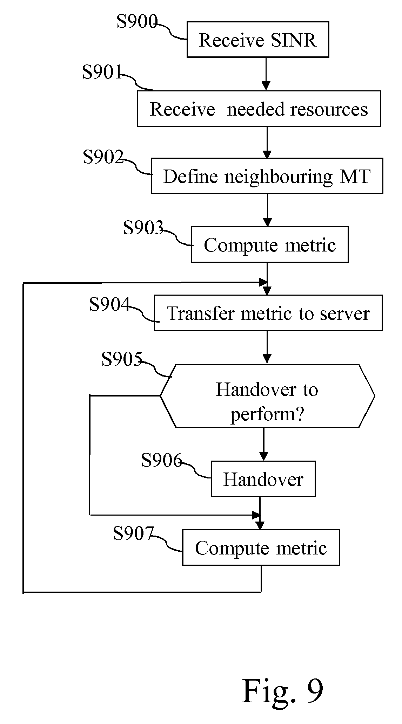

**Fig. 9** discloses a third example of an algorithm executed by a base station and/or each home base station according to the present invention.

According to the third example of realization of the present invention, only the mobile terminals MT which are located in cells of home base stations HBS are considered.

The base station BS1 identifies home base stations HBS1 which could offload some of the mobile terminals MT the base station BS1 is currently serving and informs the server Serv about the number of mobile terminals MT for which a handover to a home base station HBS could be performed.

The metric aims at keeping as much free resources as possible in each of the home base stations HBS in order to ease subsequent handover from the base station BS1 to the identified home base stations HBS.

At step S900, the processor 200 receives, from mobile terminals MT located in the cells CEi with *i*=1 to 4 measurement of the SINR on signals received from home base stations HBS.

The measurements may be received through the wireless interface 205 or through the network interface 204.

A next step S901, the processor 200 obtains the amount of resources needed to be freed by the base station BS1. The amount of resources needed to be freed by the base station BS1 may be received through the wireless interface 205 or through the network interface 204.

At next step S902, the processor 200 defines, from the received measurements of SINR, neighbouring mobile terminals MT for each home base station HBS.

At next step S903, the processor 200 computes one metric or several metrics associated to the received SINR for each neighbouring mobile terminal MT only using *Lᵢ* available resources corresponding to total amount of resources minus the number of resources needed to be freed by the base station BS.

The metric M*ᵢⱼ* is the number of free resources after associating the mobile terminal MT*j* when keeping the same throughput for mobile terminal MT*j* in the home base station HBS*i* to which the mobile terminal MT may be handed over. M*ᵢⱼ = Nᵢ - N¡,ⱼ* where *N¡* is the number of free resources among the *Lᵢ* available resources in the home base station HBS*i* and *Nᵢⱼ* equals the number of resources needed by the mobile terminal MT*j* in the home base station HBS*i*. If the mobile terminal MTj is served by the base station HBS, *N_{i,j}* is set to 0.

At next step S904, the processor 200 commands the transfer of the determined metric or metrics to the server Serv together with information identifying each mobile terminal MT served by the base station BS1 that can be handed over to an identified home base station HBS*i* through the network interface 204. The metric M*ᵢ* and the associated list of served mobile terminals MT or neighboring mobile terminals MT are transferred. In a variant, pairs of the metrics M*ᵢⱼ* are transferred.

At next step S905, the processor 200 receives a message through the network interface 204 indicating if a handover has to be performed or not for each mobile terminal MT served by the base station BS1.

If at least one handover has to be performed, the processor 200 moves to step S906 and performs a handover for each mobile terminal MT for which a handover has to be performed. After that, the processor 200 moves to step S907.

If no handover has to be performed, the processor 200 moves from step S905 to step S907.

At step S907, the processor 200 computes one metric or several metrics associated to the received SINR for only the mobile terminals MT for which no handover is performed at step S906. The metric or the metrics are determined as disclosed at step S903.

After that, the processor 200 returns to step S904.

The steps S904 to S907 are executed a predetermined number of iterations.

Naturally, many modifications can be made to the embodiments of the invention described above without departing from the scope of the present invention.

## Claims

1. Method for offloading, by at least one home base station, a base station of a wireless cellular telecommunication network, the base station serving mobile terminals, **characterized in that** the method comprises the steps of:
- obtaining (S500), by the base station and/or the home base stations, signal to interference plus noise ratio on signals received by the mobile terminals served by the base station from the at least one home base station,
- determining (S501), by the base station and/or the home base stations, mobile terminals which are located in the neighborhood of the home base stations from the obtained signal to interference plus noise ratio,
- determining, (S502) by the base station and/or the home base stations, metrics at least from the obtained signal to interference plus noise ratio,
- determining (S601), by a server of the wireless cellular telecommunication network, clusters of mobile terminals from the metrics, each cluster of mobile terminals comprising information identifying mobile terminals which are neighbours of the same number of home base stations,
- prioritizing (S602), by the server, mobile terminals which are identified in the cluster of mobile terminal comprising information identifying mobile terminals which are neighbours of the lowest number of home base stations and performing handover of the prioritized mobile terminals to at least one home base station.

2. Method according to claim 1, **characterized in that** the method is executed iteratively.

3. Method according to claim 2, **characterized in that** the method is executed as far as the variation of the sum of the metrics determined by the base station and home base stations metrics is below a threshold over one or several iterations.

4. Method according to any of the claims 1 to 3, **characterized in that** the metrics are the maximum offered throughput improvement obtained by maximizing the sum over mobile terminals of the throughput improvement offered to each mobile terminal by handing it over to one home base station compared to current offered throughput by the base station.

5. Method according to any of the claims 1 to 3, **characterized in that** the metrics are the number of free resources remaining after deciding to serve a given mobile terminal by one home base station.

6. Method according to any of the claims 1 to 3, **characterized in that** the metrics are determined for each neighbouring mobile terminal only using available resources corresponding to total amount of resources minus the number of resources needed to be freed by the base station.

7. Method according to any of the claims 1 to 3, **characterized in that** the metrics are the number of free resources after the handover of at least one mobile terminal when keeping the same throughput for mobile terminal in the home base station to which the mobile terminal may be handed over.

8. System for offloading, by at least one home base station, a base station of a wireless cellular telecommunication network, the base station serving mobile terminals, **characterized in that** the system comprises:
- means for obtaining, by the base station and/or the home base stations, signal to interference plus noise ratio on signals received by the mobile terminals served by the base station from the at least one home base station,
- means for determining, by the base station and/or the home base stations, mobile terminals which are located in the neighborhood of the home base stations from the obtained signal to interference plus noise ratio,
- means for determining, by the base station and/or the home base stations, metrics at least from the obtained signal to interference plus noise ratio,
- means for determining, by a server of the wireless cellular telecommunication network, clusters of mobile terminals from the metrics, each cluster of mobile terminals comprising information identifying mobile terminals which are neighbours of the same number of home base stations,
- means for prioritizing, by the server, mobile terminals which are identified in the cluster of mobile terminals comprising information identifying mobile terminals which are neighbours of the lowest number of home base stations and performing handover of the prioritized mobile terminals to at least one home base station.

9. Computer program which can be directly loadable into a programmable device, comprising instructions or portions of code for implementing the steps of the method according to claims 1 to 7, when said computer program is executed on a programmable device.

## Patentansprüche

1. Verfahren zum Abstoßen einer Basisstation eines drahtlosen zellularen Telekommunikationsnetzwerks durch wenigstens eine Heim-Basisstation, wobei die Basisstation mobile Endgeräte bedient, **dadurch gekennzeichnet, dass** das Verfahren die folgenden Schritte aufweist:
- Erhalten (S500) eines Signal-zu-Interferenz-plus-Rausch-Verhältnisses an Signalen, die durch die mobilen Endgeräte empfangen sind, die durch die Basisstation bedient sind, von der wenigstens einen Heim-Basisstation durch die Basisstation und/oder die Heim-Basisstationen,
- Bestimmen (S501) von mobilen Endgeräten, die in der Nachbarschaft der Heim-Basisstationen lokalisiert sind, aus dem erhaltenen Signal-zu-Interferenz-plus-Rausch-Verhältnis durch die Basisstation und/oder die Heim-Basisstationen,
- Bestimmen (502) von Metriken wenigstens aus dem erhaltenen Signal-zu-Interferenz-plus-Rausch-Verhältnis durch die Basisstation und/oder die Heim-Basisstationen,
- Bestimmen (601) von Clustern von mobilen Endgeräten aus den Metriken durch einen Server des drahtlosen zellularen Telekommunikationsnetzwerks, wobei jeder Cluster von mobilen Endgeräten Information ausweist, die mobile Endgeräte identifiziert, die Nachbarn derselben Anzahl von Heim-Basisstationen sind,
- Priorisieren (S602) von mobilen Endgeräten durch den Server, die in dem Cluster von mobilen Endgeräten identifiziert sind, die Information aufweisen, die mobile Endgeräte identifiziert, die Nachbarn der niedrigsten Anzahl von Heim-Basisstationen sind, und Durchführen einer Übergabe der priorisierten mobilen Endgeräte zu wenigstens einer Heim-Basisstation.

2. Verfahren nach Anspruch 1, **dadurch gekennzeichnet, dass** das Verfahren iterativ ausgeführt wird.

3. Verfahren nach Anspruch 2, **dadurch gekennzeichnet, dass** das Verfahren solange ausgeführt wird, bis die Variation der Summe aus den durch die Basisstation bestimmten Metriken und Metriken der Heim-Basisstationen über eine oder mehrere Iterationen unter einer Schwelle ist.

4. Verfahren nach einem der Anspruche 1 bis 3, **dadurch gekennzeichnet, dass** die Metriken die maximale angebotene Durchsatzverbesserung sind, die durch Maximieren der Summe über mobile Endgeräte der jedem mobilen Endgerät angebotenen Durchsatzverbesserung erhalten ist, indem es zu einer Heim-Basisstation übergeben wird, im Vergleich mit einem aktuellen angebotenen Durchsatz durch die Basisstation.

5. Verfahren nach einem der Anspruche 1 bis 3, **dadurch gekennzeichnet, dass** die Metriken die Anzahl von freien Betriebsmitteln sind, die nach einem Entscheiden übrigbleiben, ein gegebenes mobiles Endgerät durch eine Heim-Basisstation zu bedienen.

6. Verfahren nach einem der Anspruche 1 bis 3, **dadurch gekennzeichnet, dass** die Metriken jedes benachbarte mobile Endgerät nur unter Verwendung verfügbarer Betriebsmittel bestimmt werden, die einer Gesamtmenge von Betriebsmitteln minus der Anzahl von Betriebsmitteln, die nötig sind, um durch die Basisstation freigegeben zu werden, entsprechen.

7. Verfahren nach einem der Anspruche 1 bis 3, **dadurch gekennzeichnet, dass** die Metriken die Anzahl von freien Betriebsmitteln nach der Übergabe von wenigstens einem mobilen Endgerät sind, wenn derselbe Durchsatz für ein mobiles Endgerät in der Heim-Basisstation beibehalten wird, zu welcher das mobile Endgerät übergeben werden kann.

8. System zum Abstoßen einer Basisstation eines drahtlosen zellularen Telekommunikationsnetzwerks durch wenigstens eine Heim-Basisstation, wobei die Basisstation mobile Endgeräte bedient, **dadurch gekennzeichnet, dass** das System folgendes aufweist:
- eine Einrichtung zum Erhalten eines Signal-zu-Interferenz-plus-Rausch-Verhältnisses an Signalen, die durch die mobilen Endgeräte empfangen sind, die durch die Basisstation bedient .sind, von der wenigstens einen Heim-Basisstation durch die Basisstation und/oder die Heim-Basisstationen,
- eine Einrichtung zum Bestimmen von mobilen Endgeräten, die in der Nachbarschaft der Heim-Basisstationen lokalisiert sind, aus dem erhaltenen Signal-zu-Interferenz-plus-Rausch-Verhältnis durch die Basisstation und/oder die Heim-Basisstationen,
- eine Einrichtung zum Bestimmen von Metriken wenigstens aus dem erhaltenen Signal-zu-Interferenz-plus-Rausch-Verhältnis durch die Basisstation und/oder die Heim-Basisstationen,
- eine Einrichtung zum Bestimmen von Clustern von mobilen Endgeräten aus den Metriken durch einen Server des drahtlosen zellularen Telekommunikationsnetzwerks, wobei jeder Cluster von mobilen Endgeräten Information ausweist, die mobile Endgeräte identifiziert, die Nachbarn derselben Anzahl von Heim-Basisstationen sind,
- eine Einrichtung zum Priorisieren von mobilen Endgeräten durch den Server, die in dem Cluster von mobilen Endgeräten identifiziert sind, die Information aufweisen, die mobile Endgeräte identifiziert, die Nachbarn der niedrigsten Anzahl von Heim-Basisstationen sind, und Durchführen einer Übergabe der priorisierten mobilen Endgeräte zu wenigstens einer Heim-Basisstation.

9. Computerprogramm, das direkt in eine programmierbare Vorrichtung ladbar sein kann, mit Anweisungen oder Teilbereichen eines Codes zum Implementieren der Schritte des Verfahrens nach den Ansprüchen 1 bis 7, wenn das Computerprogramm auf einer programmierbaren Vorrichtung ausgeführt wird.

## Revendications

1. Procédé pour le déchargement, par au moins une station de base domestique, d'une station de base d'un réseau de télécommunication cellulaire sans fil, la station de base servant des terminaux mobiles, **caractérisé en ce que** le procédé comporte les étapes de :
- obtention (S500), par la station de base et/ou les stations de base domestiques, du rapport signal sur interférence plus bruit sur les signaux reçus d'au moins une station de base domestique par les terminaux mobiles servis par la station de base,
- détermination (S501), par la station de base et/ou les stations de base domestiques, des terminaux mobiles qui sont situés dans le voisinage des stations de base domestiques à partir du rapport signal sur interférence plus bruit,
- détermination, (S502) par la station de base et/ou les stations de base domestiques, de métriques au moins à partir du rapport signal sur interférence plus bruit,
- détermination (S601), par un serveur du réseau de télécommunication cellulaire sans fil, de groupes de terminaux mobiles à partir des métriques, chaque groupe de terminaux mobiles comprenant des informations d'identification des terminaux mobiles qui sont voisins d'un même nombre de stations de base domestiques,
- priorisation (S602), par le serveur, des terminaux mobiles qui sont identifiées dans le cluster de terminal mobile comprenant des informations d'identification des terminaux mobiles qui sont voisins du plus faible nombre de stations de base domestiques et réalisation d'un transfert des terminaux mobiles prioritaires vers au moins une station de base domestique.

2. Procédé selon la revendication 1, **caractérisé en ce que** le procédé est exécuté itérativement.

3. Procédé selon la revendication 2, **caractérisé en ce que** le procédé est exécuté tant que la variation de la somme des métriques déterminées par la station de base et les stations de base domestiques est inférieure à un seuil sur une ou plusieurs itérations.

4. Procédé selon l'une quelconque des revendications 1 à 3, **caractérisé en ce que** les métriques sont l'amélioration du débit maximum offert obtenu en maximisant la somme sur les terminaux mobiles de l'amélioration du débit offert à chaque terminal mobile en le transférant à une station de base domestique comparé au débit courant offert par la station de base.

5. Procédé selon l'une quelconque des revendications 1 à 3, **caractérisé en ce que** les paramètres sont le nombre de ressources libres restantes après avoir décidé de servir un terminal mobile donné par une station de base domestique.

6. Procédé selon l'une quelconque des revendications 1 à 3, **caractérisé en ce que** les métriques sont déterminées pour chaque terminal mobile voisin en utilisant uniquement les ressources disponibles correspondant au montant total des ressources moins le nombre de ressources requises devant être libérées par la station de base.

7. Procédé selon l'une quelconque des revendications 1 à 3, **caractérisé en ce que** les métriques sont le nombre de ressources libres après le transfert d'au moins un terminal mobile en gardant le même débit pour le terminal mobile dans la station de base domestique à laquelle le terminal mobile peut être transféré.

8. Système pour le déchargement par au moins une station de base domestique, d'une station de base d'un réseau de télécommunication cellulaire sans fil, la station de base servant des terminaux mobiles, **caractérisé en ce que** le système comporte :
- des moyens d'obtention, par la station de base et/ou les stations de base domestiques, du rapport signal sur interférence plus bruit sur les signaux reçus d'au moins une station de base domestique par les terminaux mobiles servis par la station de base,
- des moyens de détermination, par la station de base et/ou les stations de base domestiques, des terminaux mobiles qui sont situés dans le voisinage des stations de base domestiques à partir du rapport signal sur interférence plus bruit,
- des moyens de détermination, par la station de base et/ou les stations de base domestiques, de métriques au moins à partir du rapport signal sur interférence plus bruit,
- des moyens de détermination, par un serveur du réseau de télécommunication cellulaire sans fil, de groupes de terminaux mobiles à partir des métriques, chaque groupe de terminaux mobiles comprenant des informations d'identification des terminaux mobiles qui sont voisins d'un même nombre de stations de base domestiques,
- des moyens de priorisation, par le serveur, des terminaux mobiles qui sont identifiées dans le cluster de terminal mobile comprenant des informations d'identification des terminaux mobiles qui sont voisins du plus faible nombre de stations de base domestiques et réalisation d'un transfert des terminaux mobiles prioritaires vers au moins une station de base domestique.

9. Programme d'ordinateur qui peut être directement chargeable dans un dispositif programmable, comportant des instructions ou portions de code pour mettre en oeuvre les étapes du procédé selon les revendications 1 à 7, lorsque ledit programme informatique est exécuté sur un dispositif programmable.
